# EUROPÄISCHE PATENTSCHRIFT

(11) **EP 2 828 913 B1**
(45) Veröffentlichungstag und Bekanntmachung des Hinweises auf die Patenterteilung: **16.01.2019**
(21) Anmeldenummer: 13712215.6
(22) Anmeldetag: 22.03.2013
(51) Int. Cl.: H01M 4/14, H01M 4/73, H01M 4/74, H01M 4/84, B22D 11/00, B22D 11/04, B22D 25/04, H01M 10/12

(54) **HERSTELLUNG VON ELEKTRODEN FÜR BLEIAKKUMULATOREN**
PRODUCING ELECTRODES FOR LEAD-ACID BATTERIES
FABRICATION D'ÉLECTRODES DESTINÉES À DES ACCUMULATEURS AU PLOMB

(30) Priorität: 22.03.2012 DE 102012102461
(43) Veröffentlichungstag der Anmeldung: 28.01.2015
(73) Patentinhaber: Johnson Controls Autobatterie GmbH & Co. KGaA, 30419 Hannover (DE)
(72) Erfinder: REICH, Tatjana, 31535 Neustadt (DE)
(74) Vertreter: Trinks, Ole
(86) Internationale Anmeldenummer: PCT/EP2013/056034
(87) Internationale Veröffentlichungsnummer: WO 2013/139953

(56) Entgegenhaltungen:
- EP-A1- 0 622 161
- EP-A1- 0 976 474
- DE-A1-102008 055 775
- DE-A1-102009 030 793
- JP-A- 2002 170 570
- US-A- 3 789 910
- US-A- 4 221 032
- US-A- 4 305 187

## Beschreibung

Die Erfindung betrifft ein Verfahren zur Herstellung von Elektroden für Bleiakkumulatoren gemäß dem Anspruch 1. Die Erfindung betrifft ferner eine Anlage zur Herstellung von Elektroden für Bleiakkumulatoren gemäß dem Anspruch 11, eine Elektrode gemäß dem Anspruch 12 sowie einen Bleiakkumulator gemäß dem Anspruch 13.
Allgemein betrifft die Erfindung das Gebiet der Herstellung von Elektroden für Bleiakkumulatoren, insbesondere von negativen Elektroden. Es gibt bereits Vorschläge, z. B. in der EP 1 366 532 B1 oder DE 102 09 138 B4, ein Bleilegierungsband kontinuierlich mittels einer Strangpresseinrichtung herzustellen.
Ein derartiges Strangpressen ist jedoch relativ aufwendig. Insbesondere ist hierfür ein Extruder erforderlich. Weitere Vorschläge sind in der DE 10 2008 055775 A1, der JP 2002 170570 A oder der EP 0 976 474 A1 zu finden. Der Erfindung liegt die Aufgabe zugrunde, vereinfachte Möglichkeiten zur Herstellung von Elektroden für Bleiakkumulatoren anzugeben, die kostengünstiger realisierbar sind.

Diese Aufgabe wird gemäß einem Verfahren nach Anspruch 1 gelöst.

Die Erfindung hat den Vorteil, dass mit besonders geringen Herstellungskosten robuste Elektroden für Bleiakkumulatoren gefertigt werden können. Durch die Ausbildung des oberen bzw. des unteren Rahmenelements mit größerer Dicke werden mechanisch robustere Elektroden erzeugt als bei bekannten Herstellprozessen. Dies wird wiederum ermöglicht durch die Herstellung eines profilierten bandförmigen Rohlings, was bei bekannten Gießverfahren möglich war. Insbesondere das Verhältnis von Elektrodenqualität zu Herstellkosten wird erheblich günstiger gestaltet. Auch vor dem Hintergrund gestiegener Rohstoffkosten, z. B. für das Blei, ist das erfindungsgemäße Verfahren besonders vorteilhaft, da durch den Streckmetallprozess die bei Stanzprozessen entstehenden Stanzabfälle entfallen. Es entfällt daher auch der Aufwand für ein späteres Aufsammeln und Wiederverwerten von Stanzabfällen, da diese gar nicht erst entstehen. Die Kombination des Streckmetallprozesses mit einem Gießverfahren, insbesondere ohne Extrusionsschritt, erlaubt eine besonders schnelle Fertigung von Elektroden, was den Vorteil hat, dass vorhandene Maschinen besonders effizient genutzt werden können.
Die Elektrode kann entweder nur mit einem oberen Rahmenelement, nur mit einem unteren Rahmenelement oder mit einem oberen Rahmenelement und einem unteren Rahmen ausgebildet sein. Sofern die Elektrode sowohl das obere als auch das untere Rahmenelement aufweist, ist in einer vorteilhaften Ausgestaltung vorgesehen, dass der gitterförmige Bereich sich von dem oberen zu dem unteren Rahmenelement erstreckt. Durch das Herstellverfahren kann die Elektrode ggf. zunächst mit dem oberen und dem unteren Rahmenelement hergestellt werden und schließlich, insbesondere nach Durchführung des Streckmetallprozesses, eines der Rahmenelemente abgetrennt werden. Hierdurch weist die Elektrode während des Herstellprozesses eine erhöhte Robustheit auf, die für den Herstellprozess förderlich ist. Zusätzlich kann am Ende Material eingespart werden, indem ein Rahmenelement abgetrennt wird.
Der mittels des Gießverfahrens hergestellte bandförmige Rohling weist einseitig eine größere Dicke in den Bereichen auf, die schließlich das obere bzw. das untere Rahmenelement mit größerer Dicke bilden sollen, als in den Bereichen, die schließlich den gitterförmigen Bereich bilden sollen. Der Rohling ist dabei an seiner aus dem Gießprozess austretenden Oberseite im Wesentlichen eben ausgebildet, d. h. glatt, und weist an seiner Unterseite ein Profil auf, das Bereiche mit geringerer und Bereiche mit größerer Dicke beinhaltet. Auf diese Weise kann ein profilierter bandförmiger Rohling hergestellt werden, ohne dass ein Extruder erforderlich ist.
Die entstehende Elektrode ist ebenfalls unsymmetrisch, d. h. sie weist einseitig im Bereich des oberen und/oder des unteren Rahmenelements eine größere Dicke auf als im gitterförmigen Bereich. Hierdurch wird im gitterförmigen Bereich Material eingespart, was zu günstigeren Herstellungskosten und zu einem geringeren Gewicht führt.

Gemäß der Erfindung ist das Gießverfahrens ein kontinuierliches Gießverfahren, durch das der bandförmige Rohling kontinuierlich hergestellt wird. Das kontinuierliche Gießverfahren erlaubt die kostengünstige und zeitsparende Herstellung von prinzipiell beliebig langen bandförmigen Rohlingen und damit die kostengünstige Fertigung der Batterieelektroden mit hoher Fertigungsgeschwindigkeit und großen Stückzahlen.

Gemäß der Erfindung erfolgt die Herstellung der Elektroden ohne Extrusionsschritt, d. h. ohne Verwendung eines Extruders.
Gemäß einer vorteilhaften Weiterbildung der Erfindung wird der bandförmige Rohling mittels des Gießverfahrens mit einer Breite hergestellt, die geringer ist als die Breite der nach dem Streckmetallprozess vorliegenden Elektrode.
Gemäß einer vorteilhaften Weiterbildung der Erfindung weisen im Schritt a) die Bereiche des bandförmigen Rohlings, die schließlich den gitterförmigen Bereich bilden sollen, zunächst keine Öffnungen auf.
Gemäß einer vorteilhaften Weiterbildung der Erfindung ist vorgesehen, dass bei dem Streckmetallprozess zunächst der bandförmige Rohling mittels Schnittmessern im Bereich des herzustellenden gitterförmigen Bereichs mit Längsschlitzen versehen wird, d. h. in Längsrichtung des Rohlings verlaufenden Schlitzen, und danach der gitterförmige Bereich durch Strecken des geschlitzten Rohlings quer zur Längserstreckungsrichtung des oberen bzw. des unteren Rahmenelements erzeugt wird. Sofern zu diesem Zeitpunkt der geschlitzte Rohling sowohl das untere als auch das obere Rahmenelement aufweist, kann der gitterförmige Bereich durch Strecken des geschlitzten Rohlings erzeugt werden, indem das obere und das untere Rahmenelement in voneinander entgegengesetzten Richtungen auseinandergezogen werden. Hierdurch wird eine Zugkraft in einer Richtung quer zur Längsrichtung auf den geschlitzten Rohling ausgeübt, der schließlich zur Ausbildung des gitterförmigen Bereichs mit rautenförmigen Öffnungen führt.
Gemäß einer vorteilhaften Weiterbildung der Erfindung wird der bandförmige Rohling wenigstens mit einem ersten, einem zweiten und einem dritten sich jeweils in Längsrichtung des bandförmigen Rohlings erstreckenden Bereich, von denen wenigstens einer eine erhöhte Dicke aufweist, hergestellt und jeweils zwischen dem ersten und dem zweiten sowie zwischen dem zweiten und dem dritten Bereich geschlossene Materialbereiche ohne Öffnungen mit geringerer Dicke hergestellt. Hierbei können insbesondere die Bereiche mit erhöhter Dicke einseitig unsymmetrisch ausgebildet werden, und zwar im Zuge der Herstellung des profilierten bandförmigen Rohlings mittels des Gießverfahrens. Auch hierbei ist kein Extruder erforderlich. Vorteilhaft kann z.B. nur der zweite (mittlere) Bereich die erhöhte Dicke aufweisen, um Material zu sparen. Es können z.B. auch alle drei Bereiche, d.h. der erste, der zweite und der dritte Bereich, mit erhöhter Dicke ausgebildet werden.

Gemäß einer vorteilhaften Weiterbildung der Erfindung werden aus dem zweiten Bereich erhöhter Dicke Kontaktfahnen der Elektroden hergestellt, z. B. durch Ausstanzen bestimmter überschüssiger Bereiche des zweiten Bereichs. Dies hat den Vorteil, dass die Elektroden sozusagen als Doppelelektrodenband kontinuierlich hergestellt werden können und dabei zugleich das Material für die Kontaktfahnen bereits durch das Gießverfahren integriert wird. Gemäß einer vorteilhaften Weiterbildung befindet sich der zweite Bereich erhöhter Dicke zwischen dem ersten und dem dritten Bereich erhöhter Dicke.

Gemäß einer vorteilhaften Weiterbildung der Erfindung wird aus dem bandförmigen Rohling in einem kontinuierlichen Streckmetallprozess eine bandförmige Elektrodenanordnung hergestellt, die zu einem Coil aufgewickelt wird. Als Coil wird ein spiralförmig aufgewickelter Gegenstand verstanden. Dies hat den Vorteil, dass die Elektroden bereits weitgehend für eine spätere Verwendung in Batterien vorbereitet werden können, einschließlich der Durchführung des Streckmetallprozesses. Die Elektrodenanordnung ist nach der Durchführung des Streckmetallprozesses vergleichsweise empfindlicher gegen mechanische Einflüsse. Vorteilhaft ist daher das Aufwickeln der bereits gestreckten bandförmigen Elektrodenanordnung zu einem Coil. In dieser aufgewickelten Form ist die bandförmige Elektrodenanordnung weniger empfindlich gegen mechanische Einflüsse und kann zudem einfach für weitere Produktionsschritte zur Herstellung von Batterien eingesetzt werden.

Beim Aufwickeln kann die nicht profilierte, flache Seite der Elektroden außen liegend sein. Gemäß einer vorteilhaften Weiterbildung der Erfindung ist beim Aufwickeln die nicht profilierte, flache Seite der Elektroden innen liegend. Hierdurch kann die Elektrodenanordnung in aufgewickelter Coil-Form besonders unempfindlich gegenüber mechanischen Einflüssen gelagert werden.

Gemäß einer vorteilhaften Weiterbildung der Erfindung wird die bandförmige Elektrodenanordnung erst mit pastöser aktiver Masse pastiert und dann zu einem Coil aufgewickelt.

Gemäß einer vorteilhaften Weiterbildung der Erfindung wird die Elektrode nach dem Streckmetallprozess und ggf. vor einem Abtrennen aus der bandförmigen Elektrodenanordnung mit pastöser aktiver Masse pastiert. Anschließend kann die Elektrode mit Separatormaterial versehen werden und in das Gehäuse eines Bleiakkumulators eingesetzt werden, um schließlich einen Bleiakkumulator herzustellen.

Gemäß einer vorteilhaften Weiterbildung der Erfindung wird die Elektrode vor dem Pastieren mit pastöser aktiver Masse zunächst eingelagert und nach einer Einlagerungszeit dem Pastierprozess zugeführt. Dies hat den Vorteil, dass die Teilprozesse "Herstellung der Rohelektroden" und "Fertigstellung der elektrochemisch aktiven Elektroden" in separate Schritte aufgetrennt werden können, die unabhängig voneinander ausgeführt werden können, insbesondere mit einem zeitlichen Abstand voneinander. Da beide Verfahrensschritte mit unterschiedlichen Geschwindigkeiten ausführbar sind, kann hierdurch eine geeignete Entkopplung zwischen den Teilprozessen vorgenommen werden, die eine Adaptierbarkeit des Gesamtherstellprozesses an die Geschwindigkeiten der Teilprozesse erlaubt.

Gemäß einer vorteilhaften Weiterbildung der Erfindung können die Elektroden in Form von Coils eingelagert werden.
Die eingangs genannte Aufgabe wird ferner gelöst durch eine Anlage zur Herstellung von Elektroden für Bleiakkumulatoren, wobei die Anlage eingerichtet ist zur Ausführung eines Verfahrens nach einem der vorhergehenden Ansprüche, wobei eine durch die Anlage hergestellte Elektrode wenigstens ein oberes und/oder ein unteres Rahmenelement sowie einen sich von dem oberen bzw. dem unteren Rahmenelement fort erstreckenden gitterförmigen Bereich aufweist, der eine Vielzahl von Öffnungen aufweist, wobei das obere und/oder das untere Rahmenelement eine größere Dicke aufweist als der gitterförmige Bereich, mit den Anlagenteilen:
a) eine Gießanlage, die eingerichtet ist zur Herstellung eines profilierten, bandförmigen Rohlings, der in den Bereichen, die schließlich das obere bzw. das untere Rahmenelement bilden sollen, einseitig eine größere Dicke aufweist als in Bereichen, die schließlich den gitterförmigen Bereich bilden sollen,
b) einer Streckmetallanlage, die eingerichtet ist zum Erzeugen des gitterförmigen Bereichs mit den Öffnungen mittels eines Streckmetallprozesses.

Die Anlage ist ohne Extruder ausgebildet. Die eingangs genannte Aufgabe wird außerdem gelöst durch eine Elektrode, die nach einem der zuvor beschriebenen Verfahren hergestellt ist. Die Elektrode kann als positive oder negative Elektrode in einem Bleiakkumulator verwendet werden.
Die eingangs genannte Aufgabe wird ferner gelöst durch einen Bleiakkumulator mit einer oder mehreren der zuvor genannten Elektroden.

Die Erfindung wird nachfolgend anhand von Ausführungsbeispielen unter Verwendung von Zeichnungen näher erläutert.

Es zeigen:
- Figur 1: - die Herstellung eines bandförmigen Rohlings und
- Figur 2: - eine Elektrode,
- Figur 3: - einen Bleiakkumulator, und
- Figur 4: - eine Anlage zur Herstellung von Elektroden für Bleiakkumulatoren.

In den Figuren werden gleiche Bezugszeichen für einander entsprechende Elemente verwendet.

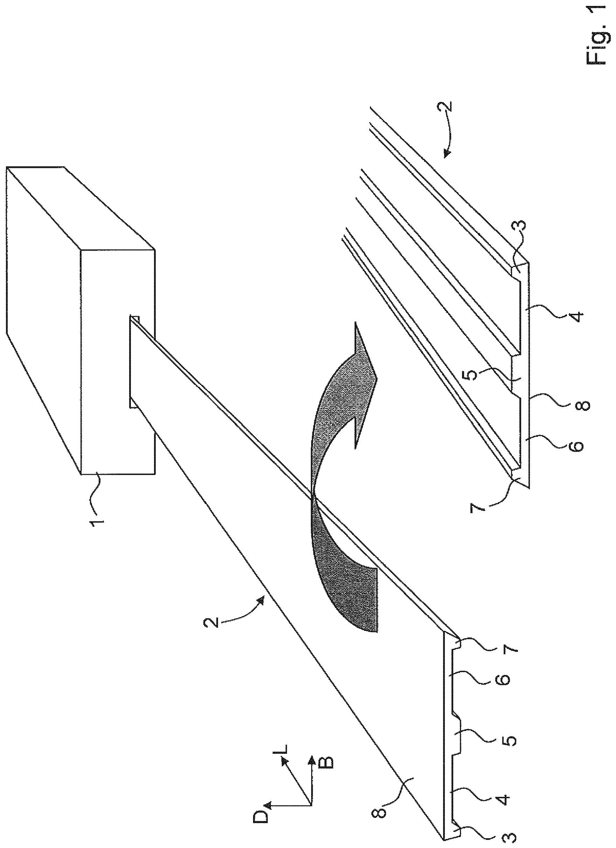

Die Figur 1 zeigt eine Gießanlage 1, die einen bandförmigen Rohling 2 für Elektroden von Bleiakkumulatoren mittels eines kontinuierlichen Gießverfahrens herstellt. Der Gießanlage 1 wird eingangsseitig Blei zugeführt (nicht dargestellt). Das Blei wird durch die Gießanlage 1 zum Schmelzen gebracht und über eine kontinuierliche Gießform, die profiliert ist, ausgangsseitig als bandförmiger Rohling 2 in der in Figur 1 dargestellten Strangform ausgegeben. Der bandförmige Rohling 2 kann dann wie nachfolgend beschrieben weiterverarbeitet werden.

Die Besonderheit der Gießanlage 1 gemäß Figur 1 besteht darin, dass der bandförmige Rohling 2 mit einem einseitigen Profil hergestellt wird, so dass der Rohling 2 über die Breite B gesehen unterschiedliche Dicken D aufweist. Erkennbar ist in der Figur 1 der aus der Gießanlage 1 austretende Rohling 2 mit einer im Wesentlichen ebenen, glatten Oberseite 8 und einer profilierten Unterseite. Der Rohling 2 weist Bereiche 3, 5, 7 mit größerer Dicke D auf als dazwischen liegende Bereiche 4, 6. Die Bereiche 3, 5, 7 mit größerer Dicke D stehen an der Unterseite gegenüber den Bereichen 4, 6 hervor. Die Figur 1 zeigt rechts einen Abschnitt des bandförmigen Rohlings 2, der um 180° um seine Längsachse gedreht ist, um die profilierte Unterseite erkennbar zu machen. Dies verdeutlicht die in Längsrichtung L verlaufende einseitige Profilstruktur des bandförmigen Rohlings 2.

Je nach Ausführungsform kann auch nur der mittlere Bereich 5 die größere Dicke D aufweisen.

Die Gießmaschine 1 ist dabei vollständig ohne Extrusionseinheit ausgebildet, d. h. sie führt ein reines Gießverfahren aus, ohne Extrusionsschritt.

Wie nachfolgend noch beschrieben wird, werden die Bereiche 4, 6 mit geringerer Dicke durch einen Streckmetallprozess in die gitterförmigen Bereiche umgewandelt, aus den Bereichen 3, 5, 7 mit größerer Dicke werden das obere und das untere Rahmenelement sowie teilweise Kontaktfahnen der Elektroden hergestellt.

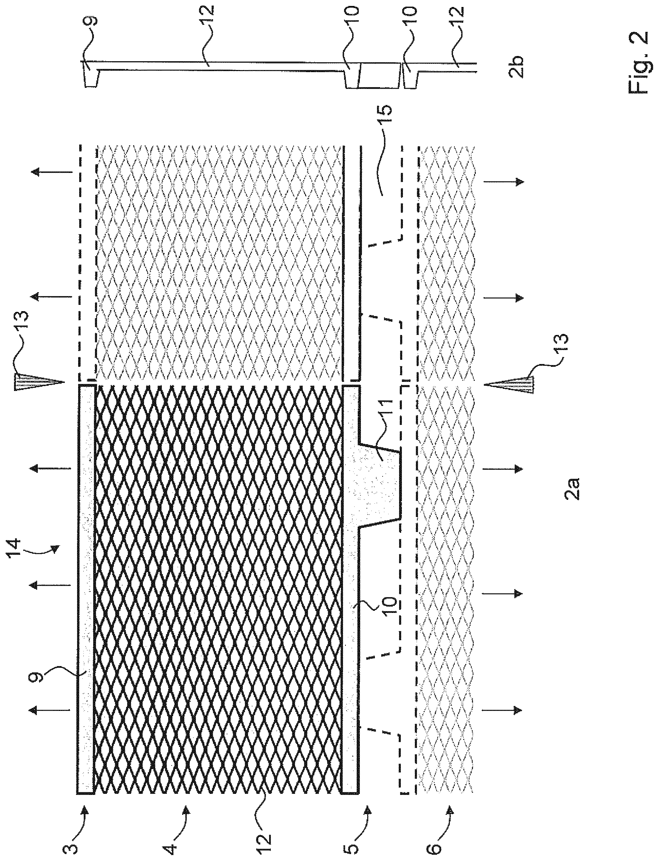

Die Figur 2 zeigt in Figur 2a eine Elektrode 14 in Draufsicht nach Durchführung des Streckmetallprozesses. Die Elektrode 14 ist zur Verdeutlichung des Zusammenhangs mit dem bandförmigen Rohling 2 mit weiteren Elektroden, die nur ausschnittsweise mit geringerem Kontrast bzw. gestrichelt wiedergegeben sind, dargestellt.

Wie erkennbar ist, weist die Elektrode 14 ein oberes Rahmenelement 10 mit einer daran angeformten Kontaktfahne 11, ein unteres Rahmenelement 9 und einen sich zwischen dem oberen und dem unteren Rahmenelement 9, 10 erstreckenden gitterförmigen Bereich 12 auf. Zur Verdeutlichung des Zusammenhangs zum bandförmigen Rohling 2 gemäß Figur 1 sind die entsprechenden Bezugszeichen der Bereiche des Rohlings 2 aus Figur 1 zusätzlich wiedergegeben.

Die in Figur 2a wiedergegebenen jeweils von dem oberen Rahmenelement 10 und dem unteren Rahmenelement 9 fort weisenden Pfeile deuten an, in welcher Richtung die Elektroden 14 bei dem Streckmetallprozess mit der Streckkraft beaufschlagt werden.

Aus dem nach dem Streckmetallprozess austretenden Elektrodenband wird durch Abschneiden einzelner Elektroden, wie durch die Dreiecke 13 in Figur 2a dargestellt, einzelne Elektroden 14 herausgetrennt. Entsprechend werden auch die Kontaktfahnen 11 von dem oberen Rahmenelement 10 der jeweils gegenüberliegenden Elektrode abgetrennt. Die Zwischenräume 15 zwischen den Kontaktfahnen 11 werden durch Ausstanzen hergestellt.

Die Figur 2 zeigt rechts in Figur 2b eine Seitenansicht der hergestellten Elektrode 14, aus der die profilierte Struktur erkennbar wird.

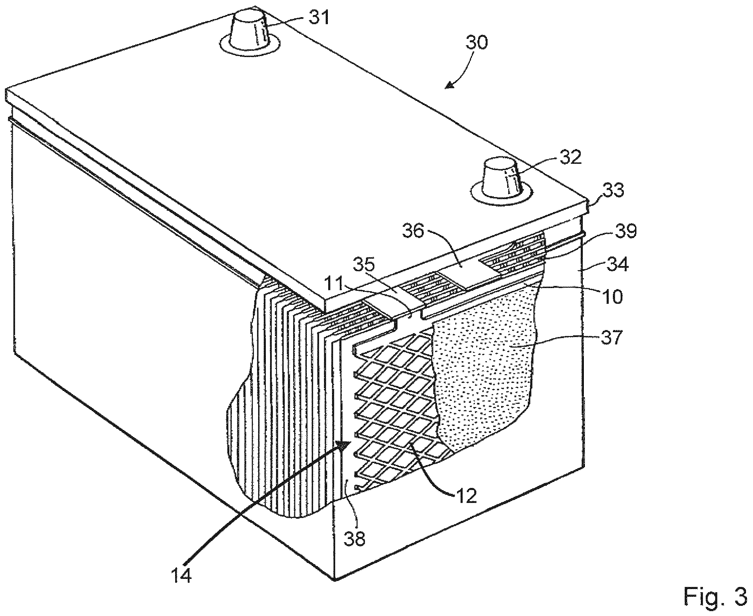

Die Figur 3 zeigt einen Bleiakkumulator 30 mit mehreren Elektroden 14 der zuvor beschriebenen Art. Der Bleiakkumulator 30 weist ein Deckelteil 33 mit äußeren Anschlusspolen 31, 32 auf. Die äußeren Anschlusspole 31, 32 sind über jeweilige Elektrodenverbinder 35, 36 jeweils mit positiven bzw. negativen Elektroden verbunden. Erkennbar ist z. B. eine Verbindung eines negativen Elektrodenverbinders 35 mit einer Kontaktfahne 11 einer Elektrode 14, die in diesem Fall als negative Elektrode verwendet ist. Der negative Elektrodenverbinder 35 ist mit den weiteren negativen Elektroden und mit dem einen Anschlusspol 31 verbunden. Analog dazu ist der positive Elektrodenverbinder 36 mit Kontaktfahnen der positiven Elektroden 39 und mit dem anderen Anschlusspol 32 verbunden.

Der Bleiakkumulator 30 weist ein Gehäuseunterteil 34 auf, in dem die Elektroden 14, 39 angeordnet sind. Die Elektroden 14, 39 sind mit einer pastösen aktiven Masse 37 versehen. Zusätzlich sind die Elektroden 14, 39 einschließlich der pastösen aktiven Masse 37 jeweils mit einem Separatormaterial 38 umhüllt.

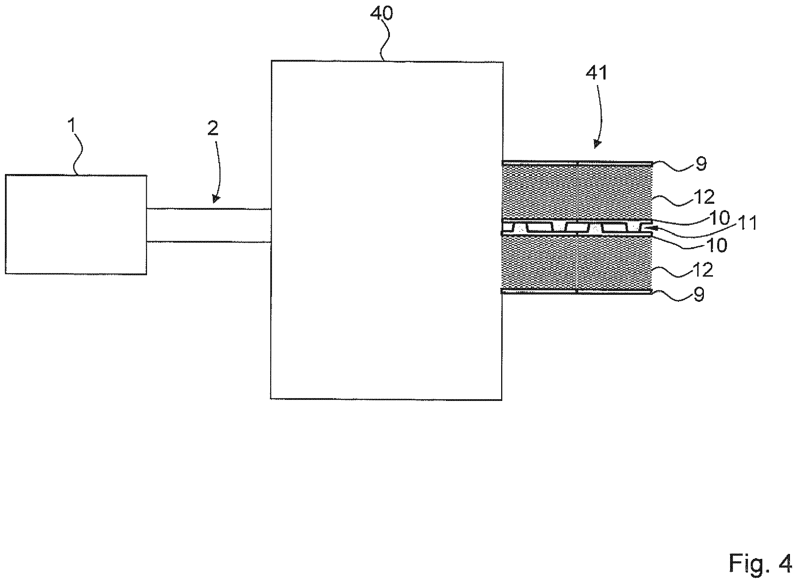

Die Figur 4 zeigt beispielhaft eine Anlage zur Herstellung von Elektroden für Bleiakkumulatoren der zuvor beschriebenen Art. Erkennbar ist wiederum die Gießanlage 1 als erster Anlagenteil. Aus der Gießanlage 1 tritt der bereits beschriebene bandförmige Rohling 2 aus. Der bandförmige Rohling 2 wird einer Streckmetallanlage 40 zugeführt, die einen zweiten Anlagenteil darstellt. Die Streckmetallanlage 40 weist zunächst eine Schneideinrichtung auf, die beispielsweise an einer rotierenden Rolle befestigte Schnittmesser aufweist. Mittels der Schnittmesser werden kurze Längsschlitze, z. B. in der Länge von wenigen Millimetern, in den bandförmigen Rohling in den Bereichen 4, 6 eingeschnitten. Nachdem der bandförmige Rohling diese Schneideinrichtung passiert hat, wird er einer Streckeinrichtung der Streckmetallanlage 40 zugeführt. In der Streckeinrichtung wird der Streckprozess ausgeführt, indem die Rahmenelemente 9, 10 in entgegen gesetzten Richtungen auseinandergezogen werden, wie in Figur 1 durch die Pfeile in Figur 2a dargestellt.

Schließlich wird der Rohling in der Streckmetallanlage 40 einem Stanzabschnitt zugeführt, in dem die freien Bereiche 15 zwischen den Kontaktfahnen 11 ausgestanzt werden. Aus der Maschine 40 tritt schließlich das Elektrodenband 41 aus, wie in Figur 4 dargestellt, das dem anhand der Figur 2 beschriebenen Elektrodenband entspricht.

## Patentansprüche

1. Verfahren zur Herstellung von Elektroden (14) für Bleiakkumulatoren (30), wobei eine hergestellte Elektrode (14) wenigstens ein oberes und/oder ein unteres Rahmenelement (9, 10) sowie einen sich von dem oberen bzw. dem unteren Rahmenelement (9, 10) fort ersteckenden gitterförmigen Bereich (12) aufweist, der eine Vielzahl von Öffnungen aufweist, wobei das obere und/oder das untere Rahmenelement (9, 10) eine größere Dicke (D) aufweist als der gitterförmige Bereich (12), mit den folgenden Schritten
a) Herstellen eines profilierten bandförmigen Rohlings (2) mittels eines Gießverfahrens, wobei nur mittels des Gießverfahrens der bandförmige Rohling (2) in einem Bereich (5), der schließlich das obere Rahmenelement (10) bilden soll, oder in den Bereichen (3, 5, 7), die schließlich das obere bzw. das untere Rahmenelement (9, 10) bilden sollen, einseitig mit einer größeren Dicke (D) ausgebildet wird als in Bereichen (4, 6), die schließlich den gitterförmigen Bereich (12) bilden sollen,
b) Erzeugen des gitterförmigen Bereichs (12) mit den Öffnungen in einem darauffolgenden Streckmetallprozess,
wobei das Gießverfahren ein kontinuierlicher Gießprozess ist, durch den der bandförmige Rohling (2) kontinuierlich hergestellt wird, und wobei der bandförmige Rohling eine nicht profilierte, flache Seite (8) und eine profilierte Seite aufweist.

2. Verfahren nach Anspruch 1,
**dadurch gekennzeichnet, dass**
bei dem Streckmetallprozess zunächst der bandförmige Rohling (2) mittels Schnittmessern im Bereich (4, 6) des herzustellenden gitterförmigen Bereichs (12) mit Längsschlitzen versehen wird und danach der gitterförmige Bereich (12) durch Strecken des geschlitzten Rohlings quer zur Längserstreckungsrichtung (L) des oberen bzw. des unteren Rahmenelements (9, 10) erzeugt wird.

3. Verfahren nach Anspruch 1 oder 2,
**dadurch gekennzeichnet, dass**
der bandförmige Rohling (2) wenigstens mit einem ersten, einem zweiten und einem dritten sich jeweils Längsrichtung des bandförmigen Rohlings (2) erstreckenden Bereich (3, 5, 7) hergestellt wird, von denen wenigstens einer eine erhöhte Dicke (D) aufweist, und jeweils zwischen dem ersten (3) und dem zweiten (5) sowie zwischen dem zweiten (5) und dem dritten (7) Bereich geschlossene Materialbereiche (4, 6) ohne Öffnungen mit geringerer Dicke (D) hergestellt werden.

4. Verfahren nach Anspruch 3,
**dadurch gekennzeichnet, dass**
aus dem zweiten Bereich (5) erhöhter Dicke (D) Kontaktfahnen (11) der Elektroden (14) hergestellt werden, z. B. durch Ausstanzen.

5. Verfahren nach einem der Ansprüche 1 bis 4,
**dadurch gekennzeichnet, dass**
aus dem bandförmigen Rohling (2) in einem kontinuierlichen Streckmetallprozess eine bandförmige Elektrodenanordnung (41) hergestellt wird, die zu einem Coil aufgewickelt wird, wobei die bandförmige Elektrodenanordnung (41) eine Vielzahl der Elektroden (14) aufweist.

6. Verfahren nach Anspruch 5,
**dadurch gekennzeichnet, dass**
beim Aufwickeln die nicht profilierte, flache Seite (8) der Elektrodenanordnung (41) innen liegend ist.

7. Verfahren nach einem der vorhergehenden Ansprüche,
**dadurch gekennzeichnet, dass**
die Elektrode (14) nach dem Streckmetallprozess und ggf. vor einem Abtrennen aus der bandförmigen Elektrodenanordnung (41) mit pastöser aktiver Masse (37) pastiert wird.

8. Verfahren nach Anspruch 7,
**dadurch gekennzeichnet, dass**
die Elektrode (14) vor dem Pastieren mit pastöser aktiver Masse (37) zunächst eingelagert wird und nach einer Einlagerungszeit dem Pastierprozess zugeführt werden.

9. Verfahren nach Anspruch 8,
**dadurch gekennzeichnet, dass**
die Elektroden (14) in Form von Coils eingelagert werden.

10. Anlage (1, 40) zur Herstellung von Elektroden (14) für Bleiakkumulatoren (30), wobei die Anlage (1, 40) eingerichtet ist zur Ausführung eines Verfahrens nach einem der vorhergehenden Ansprüche, wobei eine durch die Anlage (1, 40) hergestellte Elektrode (14) wenigstens ein oberes und/oder ein unteres Rahmenelement (9, 10) sowie einen sich von dem oberen bzw. dem unteren Rahmenelement (9, 10) fort erstreckenden gitterförmigen Bereich (12) aufweist, der eine Vielzahl von Öffnungen aufweist, wobei das obere und/oder das untere Rahmenelement (9, 10) eine größere Dicke (D) aufweist als der gitterförmige Bereich (D), mit den Anlagenteilen:
a) eine Gießanlage (1), die eingerichtet ist zur Herstellung eines profilierten, bandförmigen Rohlings (2), der in wenigstens einem der Bereiche (3, 5, 7), die schließlich das obere bzw. das untere Rahmenelement (9, 10) bilden sollen, einseitig eine größere Dicke (D) aufweist als in Bereichen (4, 6), die schließlich den gitterförmigen Bereich (12) bilden sollen,
b) einer Streckmetallanlage (40), die eingerichtet ist zum Erzeugen des gitterförmigen Bereichs (12) mit den Öffnungen mittels eines Streckmetallprozesses.

11. Elektrode (14), hergestellt nach einem der Ansprüche 1 bis 9.

12. Bleiakkumulator (30) mit einer oder mehreren Elektroden (14) nach Anspruch 11.

## Claims

1. Process for producing electrodes (14) for lead storage batteries (30), a produced electrode (14) having at least an upper and/or a lower frame element (9, 10) and also a region in mesh form (12) that extends away from the upper or lower frame element (9, 10) and has a multiplicity of openings, the upper and/or lower frame element (9, 10) having a greater thickness (D) than the region in mesh form (12), with the following steps of:
a) producing a profiled blank in strip form (2) by means of a casting process, the casting process only being used for forming the blank in strip form (2) with a greater thickness (D) on one side in a region (5) that is intended finally to form the upper frame element (10) or in the regions (3, 5, 7) that are intended finally to form the upper or lower frame element (9, 10) than in regions (4, 6) that are intended finally to form the region in mesh form (12),
b) creating the region in mesh form (12) with the openings in a then-following metal expanding process,
the casting process being a continuous casting process, by which the blank in strip form (2) is produced continuously, and the blank in strip form having a non-profiled, flat side (8) and a profiled side.

2. Process according to Claim 1,
**characterized in that**
in the metal expanding process, first the blank in strip form (2) is provided with longitudinal slits by means of cutting blades in the region (4, 6) of the region in mesh form (12) to be produced and then the region in mesh form (12) is created by expanding the slit blank transversely in relation to the direction of longitudinal extent (L) of the upper or lower frame element (9, 10).

3. Process according to Claim 1 or 2,
**characterized in that**
the blank in strip form (2) is produced at least with a first region (3), a second region (5) and a third region (7), respectively extending in the longitudinal direction of the blank in strip form (2), at least one of which regions has an increased thickness (D), and closed material regions (4, 6) without openings with a smaller thickness (D) are respectively produced between the first region (3) and the second region (5) and between the second region (5) and the third region (7).

4. Process according to Claim 3,
**characterized in that**
contact tabs (11) of the electrodes (14) are produced from the second region (5) of increased thickness (D), for example by punching out.

5. Process according to one of Claims 1 to 4,
**characterized in that**
an electrode arrangement in strip form (41) is produced from the blank in strip form (2) in a continuous metal expanding process and is wound up to form a coil, the electrode arrangement in strip form (41) having a multiplicity of electrodes (14).

6. Process according to Claim 5,
**characterized in that**
during the winding up, the non-profiled, flat side (8) of the electrode arrangement (41) is lying on the inside.

7. Process according to one of the preceding claims,
**characterized in that**
after the metal expanding process, and before possible detachment from the electrode arrangement in strip form (41), the electrode (14) is pasted with a pasty active compound (37).

8. Process according to Claim 7,
**characterized in that**
before pasting with a pasty active compound (37), the electrode (14) is first stored and is only passed on to the pasting process after a storage time.

9. Process according to Claim 8,
**characterized in that**
the electrodes (14) are stored in the form of coils.

10. Installation (1, 40) for producing electrodes (14) for lead storage batteries (30), the installation (1, 40) being set up for performing a process according to one of the preceding claims, an electrode (14) produced by the installation (1, 40) having at least an upper frame element (9) and/or a lower frame element (10) and also a region in mesh form (12) that extends away from the upper or lower frame element (9, 10) and has a multiplicity of openings, the upper and/or lower frame element (9, 10) having a greater thickness (D) than the region in mesh form (D), with the following parts of the installation:
a) a casting installation (1), which is set up for producing a profiled blank in strip form (2) which has a greater thickness (D) on one side in at least one of the regions (3, 5, 7) that are intended finally to form the upper or lower frame element (9, 10) than in regions (4, 6) that are intended finally to form the region in mesh form (12),
b) a metal expanding installation (40), which is set up for creating the region in mesh form (12) with the openings by means of a metal expanding process.

11. Electrode (14), produced according to one of Claims 1 to 9.

12. Lead storage battery (30) with one or more electrodes (14) according to Claim 11.

## Revendications

1. Procédé de fabrication d'électrodes (14) pour des accumulateurs au plomb (30), une électrode (14) fabriquée possédant au moins un élément de cadre (9, 10) supérieur et/ou inférieur ainsi qu'une zone en forme de grille (12) qui s'étend depuis l'élément de cadre (9, 10) supérieur et/ou inférieur et qui possède une pluralité d'ouvertures, l'élément de cadre (9, 10) supérieur et/ou inférieur possédant une épaisseur (D) plus importante que celle de la zone en forme de grille (12), comprenant les étapes suivantes:
a) fabrication d'une ébauche (2) profilée en forme de bande au moyen d'un procédé de coulée, la configuration de l'ébauche (2) en forme de bande avec, dans une zone (5) qui doit finalement former l'élément de cadre supérieur (10) ou dans les zones (3, 5, 7) qui doivent finalement former l'élément de cadre (9, 10) supérieur et/ou inférieur, une épaisseur (D) plus importante que dans les zones (4, 6) qui doivent finalement former la zone en forme de grille (12) n'étant réalisée qu'au moyen du procédé de coulée,
b) génération de la zone en forme de grille (12) dotée des ouvertures dans un processus de métal déployé qui suit
le procédé de coulée étant un processus de coulée en continu par lequel l'ébauche (2) en forme de bande est fabriquée en continu, et l'ébauche (2) en forme de bande possédant un côté plat (8) non profilé et un côté profilé.

2. Procédé selon la revendication 1,
**caractérisé en ce que**
lors du processus de métal déployé, l'ébauche (2) en forme de bande est tout d'abord pourvue de fentes allongées au moyen de lames de coupe dans la zone (4, 6) de la zone en forme de grille (12) à fabriquer et la zone en forme de grille (12) est ensuite produite par étirage de l'ébauche fendue transversalement par rapport au sens d'extension longitudinal (L) de l'élément de cadre (9, 10) supérieur et/ou inférieur.

3. Procédé selon la revendication 1 ou 2,
**caractérisé en ce que**
l'ébauche (2) en forme de bande est fabriquée au moins avec une première, une deuxième et une troisième zone (3, 5, 7) qui s'étend respectivement dans le sens longitudinal de l'ébauche (2) en forme de bande, parmi lesquelles au moins l'une possède une épaisseur (D) accrue et des zones de matière (4, 6) fermées sans ouvertures ayant une épaisseur (D) plus faible étant respectivement fabriquées entre la première (3) et la deuxième (5) ainsi qu'entre la deuxième (5) et la troisième (7) zone.

4. Procédé selon la revendication 3,
**caractérisé en ce que**
des languettes de contact (11) des électrodes (14) sont fabriquées, par exemple par estampage, à partir de la deuxième zone (5) à l'épaisseur (D) accrue.

5. Procédé selon l'une des revendications 1 à 4,
**caractérisé en ce**
**qu'**un arrangement d'électrodes (41) en forme de bande, lequel est enroulé en une bobine, est fabriqué à partir de l'ébauche (2) en forme de bande dans un processus de métal déployé en continu, l'arrangement d'électrodes (41) en forme de bande possédant une pluralité d'électrodes (14).

6. Procédé selon la revendication 5,
**caractérisé en ce que**
lors de l'enroulement, le côté plat (8) non profilé de l'arrangement d'électrodes (41) se trouve à l'intérieur.

7. Procédé selon l'une des revendications précédentes, **caractérisé en ce que**
l'électrode (14) est empâtée avec une masse active pâteuse (37) après le processus de métal déployé et éventuellement avant une séparation de l'arrangement d'électrodes (41) en forme de bande.

8. Procédé selon la revendication 7,
**caractérisé en ce**
**qu'**avant l'empâtage avec la masse active pâteuse (37), l'électrode (14) est tout d'abord entreposée et amenée au processus d'empâtage après un temps d'entreposage.

9. Procédé selon la revendication 8,
**caractérisé en ce que**
les électrodes (14) sont entreposés en forme de bobines.

10. Installation (1, 40) destinée à la fabrication d'électrodes (14) pour des accumulateurs au plomb (30), l'installation (1, 40) étant conçue pour mettre en oeuvre un procédé selon l'une des revendications précédentes, une électrode (14) fabriquée par l'installation (1, 40) possédant au moins un élément de cadre (9, 10) supérieur et/ou inférieur ainsi qu'une zone en forme de grille (12) qui s'étend depuis l'élément de cadre (9, 10) supérieur et/ou inférieur et qui possède une pluralité d'ouvertures, l'élément de cadre (9, 10) supérieur et/ou inférieur possédant une épaisseur (D) plus importante que celle de la zone (D) en forme de grille (12), comprenant les parties d'installation:
a) une installation (1) de coulée qui est conçue pour fabriquer une ébauche (2) profilée en forme de bande qui, dans au moins l'une des zones (3, 5, 7) qui doivent finalement former l'élément de cadre (9, 10) supérieur et/ou inférieur, possède unilatéralement une épaisseur (D) plus importante que dans les zones (4, 6) qui doivent finalement former la zone en forme de grille (12),
b) une installation de métal déployé (40) qui est conçue pour générer la zone en forme de grille (12) dotée des ouvertures au moyen d'un processus de métal déployé.

11. Électrode (14), fabriquée selon l'une des revendications 1 à 9.

12. Accumulateur au plomb (30) comprenant une ou plusieurs électrodes (14) selon la revendication 11.
